# EUROPÄISCHE PATENTSCHRIFT

(11) **EP 1 183 220 B1**
(45) Veröffentlichungstag und Bekanntmachung des Hinweises auf die Patenterteilung: **13.11.2002**
(21) Anmeldenummer: 00925155.4
(22) Anmeldetag: 31.03.2000
(51) Int. Cl.: C05G 3/08

(54) **MITTEL ZUR VERBESSERUNG DER N-AUSNUTZUNG MINERALISCHER UND/ODER ORGANISCHER HARNSTOFFHALTIGER DÜNGEMITTEL**
AGENTS FOR IMPROVING THE N-UTILIZATION OF MINERAL AND/OR ORGANIC FERTILIZERS THAT CONTAIN UREA
AGENTS PERMETTANT D'AMELIORER L'UTILISATION DE L'AZOTE DE SUBSTANCES FERTILISANTES MINERALES ET/OU ORGANIQUES

(30) Priorität: 08.04.1999 DE 19915749
(43) Veröffentlichungstag der Anmeldung: 06.03.2002
(73) Patentinhaber: SKW STICKSTOFFWERKE PIESTERITZ GmbH, 06886 Lutherstadt Wittenberg (DE)
(72) Erfinder: MICHEL, Hans-Jürgen, D-04827 Machern (DE); WOZNIAK, Harmut, D-04451 Cunnersdorf (DE); LANG, Brunhilde, D-04451 Cunnersdorf (DE); NICLAS, Hans-Joachim, D-12435 Berlin (DE); JASCHE, Klaus, D-06886 Lutherstadt Wittenberg (DE)
(74) Vertreter: HOFFMANN - EITLE
(86) Internationale Anmeldenummer: EP0002909
(87) Internationale Veröffentlichungsnummer: WO00061522

(56) Entgegenhaltungen:
- WO-A-95/22515
- DD-A- 231 360
- DE-A- 19 631 764
- US-A- 4 518 413
- US-A- 4 530 714

## Beschreibung

### Gebiet der Erfindung

Die vorliegende Erfindung bezieht sich auf neue Mittel, die zur Verbesserung der Stickstoff-Ausnutzung von harnstoffbasierten mineralischen und/oder organischen Düngemitteln führen.

### Hintergrund der Erfindung

Stickstoff stellt einen der Hauptnährstoffe dar, deren kontinuierliche Verfügbarkeit wesentlich für das pflanzliche Wachstum, die Qualität der Ernteprodukte und für das Ertragsniveau von Kulturpflanzen ist. Dabei hängt die optimale Versorgung der Pflanzen generell von einer Vielzahl von Einflussfaktoren wie Klima, Bodenbeschaffenheit, Nährstoffverfügbarkeit u. a. m. ab.

Sollen sich Düngemaßnahmen ökonomisch im Ernteergebnis widerspiegeln, ist eine Minimierung der unterschiedlichen Verlustpotentiale gleichermaßen von Vorteil. Besonders bei harnstoffhaltigen Stickstoffdüngemitteln sind hierfür zwei Ursachen verantwortlich. So treten unter ungünstigen Boden- und/oder Klimabedingungen Stickstoff-Verluste in Form von NH₃ als Folge einer unkontrollierten ureasekatalysierten Harnstoff-Hydrolyse auf. Zweitens geht Stickstoff in Form von Nitrat verloren, das durch Auswaschung oder Verlagerung in tiefere Bodenschichten der Pflanzenernährung entzogen wird. Darüber hinaus können diese Stickstoff-Verluste noch erhöht werden, wenn im Verlaufe der rasch verlaufenden Nitrifikation von Ammoniumionen, die durch den Boden gut adsorbiert werden, relativ große Mengen an Nitrat gebildet werden, die ihrerseits durch die einsetzende Denitrifikation in molekularen Stickstoff überführt werden können und damit gleichfalls für die pflanzliche Ernährung nicht mehr verfügbar sind. So sind unter ungünstigen Bedingungen, besonders in tropischen und subtropischen Klimazonen, Stickstoffverluste nachgewiesen worden, die in der Summe der einzelnen hierfür verantwortlichen Prozesse bis zu 50 % des applizierten Düngestickstoffs erreichen können und dadurch neben ihrer teilweise negativen Auswirkung auf die Umwelt zum ertragslimitierenden Faktor werden.

Um dieses Verlustpotential zu minimieren, werden bedarfsgerecht mehrfach geteilte Düngergaben empfohlen, die jedoch für den Landwirt infolge zusätzlicher Applikationskosten mit erheblichen arbeitswirtschaftlichen Nachteilen und entsprechenden Mehraufwendungen verbunden sind.

Andere Möglichkeiten bestehen in der gezielten Hemmung der urease-katalysierten Harnstoffhydrolyse auf der einen und in der Nitrifikationshemmung auf der anderen Seite. Hierfür sind unterschiedliche chemische Mittel vorgeschlagen worden.

Stellvertretend für Ureaseinhibitoren seien die Phosphorsäurediamide (DD 122 177) und Phosphorsäuretriamide (US 4,540,428, US 4,676,822, US 4,696,693, US 4,537,614, US 4,517,004) genannt, von denen das N-(n-Butyl)-thiophosphorsäuretriamid (NBTPT) als einziger Vertreter bisher kommerzialisiert wurde (IMC-Agrico Corp., Produktbezeichnung AGROTAIN). In China wird Hydrochinon in einer Harnstoff-Formulierung als Ureaseinhibitor in der landwirtschaftlichen Praxis eingesetzt (Trends in Soil Science 1991, 45-51).

Als Nitrifikationsinhibitoren sind beispielsweise substituierte Pyrazole (DD 131 063, US 3,363,690), Triazole (DE 18 04 994, US 3,697,244, US 3,701,645) aber auch Wirkstoffkombinationen auf Basis von Pyrazolverbindungen und Dicyandiamid (DD 227 957) oder von Triazolderivaten und Dicyandiamid (WO 95/22515) vorgeschlagen worden.

Andererseits werden durch US 5,364,438 neue flüssige Stickstoffdünger beschrieben, die neben gelöstem Stickstoff in Form von Harnstoff und anderen Stickstoffnährstoff-Formen auch Anteile an N-(n-Butyl)-thiophosphorsäuretriamid und Dicyandiamid enthalten.

Inzwischen vorliegende Untersuchungsergebnisse zur gleichzeitigen Anwendung von harnstoffbasierten Düngemitteln mit NBTPT und DCD weisen jedoch aus, dass die beispielsweise beabsichtigte Senkung der Ammoniakverluste durch die zusätzliche Gegenwart eines Nitrifikationsinhibitors zum Ureasehemmstoff nahezu aufgehoben wird. Dieser Befund spiegelt sich unerwartet drastisch auch in den Erträgen wider, die teilweise noch unter dem Niveau der als Vergleich herangezogenen alleinigen Harnstoffdüngung lagen (F. Montemurro et al., J. Plant Nutr. 21 (1998), 245-252).

Bestätigt werden diese Ergebnisse durch Arbeiten von P. Chawainakupt u. a. (Biol. Fertil. Soils 22 (1996), 89-95). Zwar wird auch hier erwartungsgemäß die Ammoniakverlustrate durch die Hemmung der ureasekatalysierten Harnstoffhydrolyse mittels NBTPT erheblich zurückgedrängt, nimmt aber unerwarteterweise wieder zu, wenn NBTPT zusammen mit einen Nitrifikationsinhibitor auf Basis Acetylen (hergestellt aus Calciumcarbid) appliziert wird. Auch hier liegen die Erträge deutlich unter den Erwartungen.

### Darstellung der Erfindung

Ziel der vorliegenden Erfindung war es, Mittel zu finden, die die aufgeführten praktischen Nachteile entsprechend dem Stand der Technik nicht aufweisen, sondern durch die gleichzeitige Hemmung der Urease und der Nitrifikation die Anwendung harnstoffhaltiger Düngemittel noch effektiver gestalten.

Dabei werden unter "harnstoffhaltigen Düngemitteln" bzw. "Düngemitteln auf Harnstoffbasis" solche Düngemittel verstanden, deren wesentliche Stickstoffkomponente Harnstoff ist.

Diese Aufgabe wurde erfindungsgemäß durch die Bereitstellung der chemischen Zusammensetzung entsprechend Anspruch 1 gelöst.

Es hat sich nämlich überraschenderweise gezeigt, dass die erfindungsgemäßen chemischen Zusammensetzungen bestehend aus speziellen Urease- und Nitrifikationsinhibitoren erhöhte Erträge bei Kulturpflanzen bewirken bzw. eine Reduzierung der N-Düngergabe bei konstantem Ertragsniveau ermöglichen.

### Ausführliche Beschreibung der Erfindung und bevorzugter Ausführungsformen

Die chemische Zusammensetzung entsprechend der vorliegenden Erfindung besteht aus mindestens zwei Komponenten. Die erste erfindungsgemäße Komponente a) stellt einen Ureaseinhibitor der allgemeinen Formel I dar: 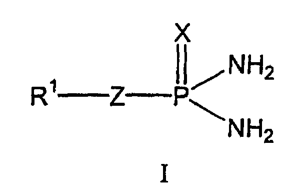 in der
- X =: O, S
- Z =: O, S oder -N-R² mit R² = Wasserstoff, C₁- bis C₈-Alkyl,
- R¹: im Falle Z = O oder S Phenyl,
im Falle von Z = N-R² Wasserstoff oder C₁- bis C₄-Alkyl oder 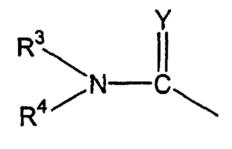 oder
R⁵OOC
bedeuten und
- R³, R⁴: unabhängig voneinander für Wasserstoff, einen Alkyl-Aryl-, Aralkyl-, Arylcarbonylamino-, Alkylcarbonylamino- oder Aralkylcarbonylaminorest stehen, wobei die Alkylreste jeweils 1 bis 8 C-Atome und die Arylreste jeweils 6 bis 10 C-Atome aufweisen und ggf. substituiert sein können, oder R³, R⁴ gemeinsam einen 1H-1,2,4-Triazol- oder einen ggf. in 4-Stellung substituierten 3(5)-Methylpyrazolring bilden,
- R⁵: einen C₁- bis C₈-Alkyl, einen C₆- bis C₁₀-Aryl- oder einen C₇- bis C₁₀-Aralkylrest darstellt, die ggf. substituiert sein können,
- Y: O, S oder = NH bedeuten.

Als Substituenten für die Alkyl-, Aryl- oder Aralkylreste in R³, R⁴ und R⁵ kommen Halogen, insbesondere Chlor, Alkyl-, Mono- oder Dialkylamino-, Mono- oder Diarylamino-, Alkoxy- oder Aryloxy-Gruppen sowie -OH, -NO₂, -SO₃H, -COOH, -COOR⁹ (R⁹ = Alkyl- oder Aryl-) und -OCOR¹⁰ (R¹⁰ = Alkyl- oder Aryl-) in Frage, wobei die Alkylgruppen jeweils 1 bis 6 C-Atome und die Arylreste 6 bis 10 C-Atome aufweisen.

Die durch R³ und R⁴ gebildeten 3-Methylpyrazolringe tragen vorzugsweise in 4-Stellung einen C₁ bis C₄-Alkylrest oder einen Halogenrest, vorzugsweise Chlor.

Die entsprechenden (Thio-)Phosphorsäurediamide bzw. -triamide sind bekannt und bspw. in den Literaturstellen Chai H.S. und J.M. Bremner Biol. Fert. Soils 3, 189-94 (1987), DD 122 177 bzw. in der DE-Anmeldung 199 13 476 beschrieben.
Als weitere Komponente enthält die erfindungsgemäße chemische Zusammensetzung wenigstens eine Verbindung, die ausgewählt wird aus:
b₁) Nitrifikationsinhibitoren der unten angegebenen allgemeinen Formel II und
b₂) 1H-1,2,4-Triazol.

Nachfolgend werden die Nitrifikationsinhibitoren b₁) näher beschrieben. Sie werden durch die folgende Formel II wiedergegeben:

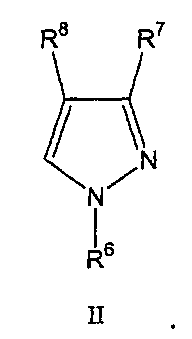

Eingeschlossen sind auch davon abgeleitete mögliche Isomere, Salze oder Komplexverbindungen.
In der Formel II bedeuten:
- R⁶ =: Wasserstoff, Guanyl, C₁- bis C₄-Hydroxyalkyl, C₁- bis C₄-Carboxyalkyl,
- R⁷ =: Wasserstoff oder C₁- bis C₅-Alkyl,
- R⁸ =: Wasserstoff, C₁- bis C₈-Alkyl oder Halogen; bevorzugte Halogensubstituenten sind Fluor, Chlor und Brom.

Gemäß einer bevorzugten Ausführungsform können die für R⁶ stehenden C₁-C₄-Hydroxyalkylreste noch zusätzliche Halogen-Substituenten (insbesondere Chlor) aufweisen.

Es ist im Rahmen der vorliegenden Erfindung auch möglich, dass die Komponente b₁) (Pyrazol-Derivat) in Form eines Salzes ausgewählt aus der Gruppe Nitrat, Halogen, Sulfat, Phosphat und Acetat vorliegt.
Die erfindungsgemäß eingesetzten Pyrazol-Derivate sind an sich bekannt und bspw. in den Druckschriften DD 131 063, US 3,363,690 oder in der DE-Anmeldung 199 13 475 beschrieben.

Die erfindungsgemäßen chemischen Zusammensetzungen können in Düngemitteln auf Harnstoffbasis verwendet werden. Derartige Düngemittel enthalten bevorzugt, bezogen auf den Stickstoffgehalt des Düngemittels, 0,1 bis 4,5 Gew.-% des Ureaseinhibitors a), sowie 0,1 bis 5,0 Gew.-% des Nitrifikationsinhibitors b₁) und/oder 0,25 bis 4,5 Gew.-% 1H-1,2,4-Triazol b₂). Für die Wirksamkeit solcher Düngemittel hat es sich als besonders vorteilhaft erwiesen, dass die Komponente b₁) (Pyrazol-Derivat) und/oder b₂) (1H-1,2,4-Triazol) noch 1 bis 20 Gew.-Teile Dicyandiamid pro Gew.-Teil Pyrazol-Derivat bzw. 1H-1,2,4-Triazol enthält.

Die erfindungsgemäßen chemischen Zusammensetzungen lassen sich hervorragend als Additive für harnstoffhaltige Stickstoffdüngemittel verwenden, wobei sie vorzugsweise in einer Menge von 0,1 bis 30 Gew.-% bezogen auf das Gewicht des Stickstoffdüngemittels eingesetzt werden.

Parallel zur Verbesserung der Stickstoff-Ausnutzung der harnstoffhaltigen mineralischen und organischen Düngemittel wird durch die Verwendung dieser Mittel erreicht, dass es zu einer teilweise erheblichen Steigerung der Erträge bzw. der Biomasseproduktion von Kulturpflanzen kommt.

Gleichermaßen können sie organischen Düngern, wie beispielsweise Gülle, bereits während der Lagerung zugesetzt werden, um auf diese Weise Stickstoff-Nährstoffverluste infolge einer gebremsten Umwandlung der einzelnen Stickstoff-Formen zu gasförmigen und somit flüchtigen Stickstoffverbindungen zu vermeiden und um dadurch gleichzeitig zur Senkung der Ammoniakbelastung in Tierställen beizutragen.

Die erfindungsgemäßen Mittel weisen im Gegensatz zu Literaturbefunden eine unerwartet hohe biologische Wirksamkeit auf. So sind besonders die außerordentlich hohen Ertragszuwachsraten hervorzuheben (siehe Beispiel 1 bis 6). Die durch die Anwendung der erfindungsgemäßen Mittel erzielten hohen Erträge verkörpern ein objektives Kriterium ihrer Wirksamkeit und sind gleichzeitig ein Beleg für ihre hohe Anwendungssicherheit, die mit einer guten Umwelt- und Kulturpflanzenverträglichkeit einhergeht.

Dabei ist es unerheblich, ob die erfindungsgemäßen Mittel in das Düngemittel eingearbeitet, z. B. eingeschmolzen, oder aber auf die Düngemitteloberfläche aufgetragen bzw. getrennt von der Düngemittelausbringung in Form eines (Suspensions)-Konzentrates, einer Lösung oder einer Formulierung appliziert werden. Um eine hohe Wirksamkeit der erfindungsgemäßen Mittel zu erzielen, empfiehlt es sich, dies kurz vor oder nach der Düngung vorzunehmen.

Die nachfolgenden Beispiele sollen die Erfindung näher veranschaulichen.

### Beispiele

Die erfindungsgemäßen Mittel wurden in Gefäßversuchen unter Verwendung unterschiedlicher harnstoffhaltiger Stickstoffdüngemittel sowie variierenden Mischungsverhältnissen der erfindungsgemäßen Zusammensetzungen geprüft, wobei die Wirksamkeit der einzelnen Prüfprodukte anhand des erzielten Ertrages verglichen zur unbehandelten, aber gedüngten Variante bemessen wurde.

In den einzelnen Beispielen wurden folgende Abkürzungen verwendet:
Dünger:
   - AHL 28 -: Ammoniumnitrat-Harnstoff-Lösung, 28 % N
   - HS -: Harnstoff
Nitrifikationshemmstoffe:
   - DCD -: Dicyandiamid
   - MP -: 3-Methylpyrazol
   - GMPN -: 1-Guanyl-3-methylpyrazoliumnitrat
   - DMP -: 3,4-Dimethylpyrazol
   - TZ -: 1H-1,2,4-Triazol
   - ClMP -: 4-Chlor-3-methylpyrazol
Ureaseinhibitoren:
   - PPDA -: Phosphorsäurephenylesterdiamid
   - NBPT -: N-(n-Butyl)-phosphorsäuretriamid
   - NBTPT -: N-(n-Butyl)-thiophosphorsäuretriamid
   - DMPH -: N-(Diaminophosphoryl)-N'-(4-methoxyphenyl)-harnstoff
   - DH -: N-Diaminophosphoryl-harnstoff
   - DPH -: N-(Diaminophosphoryl)-N'-phenyl-harnstoff
   - DCM -: Diaminophosphorylcarbamidsäuremethylester
   - DCB -: Diaminophosphorylcarbamidsäurebenzylester
   - DCIP -: Diaminophosphorylcarbamidsäureisopropylester

### Versuchsmethode

Mitscherlichgefäße werden jeweils mit 7,0 kg Erde, bestehend aus einem Gemisch des Bodens Cunnersdorf und Quarzsand (5,5 kg + 1,5 kg) befüllt. Parallel dazu wird dieser Boden bis auf die N-Gabe mit Makro- und Mikronährstoffen versehen. Durch indirekte Bewässerung über ein in den Boden eingebrachtes Bewässerungsrohr wird das Substrat bis zur Aussaat bei 60 % der maximalen Wasserkapazität gehalten. 14 Tage vor der Saat erfolgt die Applikation der N-Dünger-Wirkstoffgemische auf die Bodenoberfläche.

Erst nach Ablauf dieser Zeitspanne wird der Dünger unmittelbar vor der Aussaat in den Boden eingearbeitet. Die weitere Bewässerung erfolgt über die Bodenoberfläche.
20 Tage nach der Aussaat erhält jedes Gefäß eine Zusatzbewässerung, um in Simulation von Niederschlägen eine Auswaschung von Nitrat zu induzieren.
Entscheidend für die Wirksamkeit, der erfindungsgemäßen Mittel ist das Prüfkriterium Ertrag.
Die statistische Auswertung erfolgte nach DUNCAN.

### Beispiel 1: Einfluß der Wirkstoffanteile von PPDA, NBPT, NBTPT und deren Kombinationen mit DCD/MP auf den Trockenmasseertrag (TM) von Grünmais bei Oberflächendüngung (0,7 g AHL-N/Gefäß).

| Bezugsbasis: AHL 28 | | | | | |
|---|---|---|---|---|---|
| Pgl. Nr. | Prüfglied (Pgl.) | Konzentration (% Ges.-N-bezogen) | | TM-Ertrag | |
| | | PPDA bzw. NBPT bzw. NBTPT | DCD/MP | g/Gefäß | rel. in % |
| 1 | Ohne N | - | - | 31,80 | 39,4 |
| 2 | AHL 28 | - | - | 80,78 | 100 |
| 3 | AHL 28 + PPDA | 0,25 | - | 82,48 | 102,1 |
| 4 | AHL 28 + PPDA | 0,35 | - | 83,95 | 103,9 |
| 5 | AHL 28 + PPDA | 0,45 | - | 86,03 | 106,5 |
| 6 | AHL 28 + NBPT | 0,25 | - | 85,93 | 106,4 |
| 7 | AHL 28 + NBPT | 0,35 | - | 86,33 | 106,9 |
| 8 | AHL 28 + NBPT | 0,45 | - | 88,58 | 109,6 |
| 9 | AHL 28 + NBTPT | 0,25 | - | 88,48 | 109,5 |
| 10 | AHL 28 + NBTPT | 0,35 | - | 89,08 | 110,3 |
| 11 | AHL 28 + NBTPT | 0,45 | - | 88,40 | 109,4 |
| 12 | AHL 28 + PPDA + DCD/MP (15:1) | 0,35 | 2,0 | 91,48* | 113,2 |
| 13 | AHL 28 + PPDA + DCD/MP (15:1) | 0,45 | 2,0 | 93,73* | 116,0 |
| 14 | AHL 28 + NBPT + DCD/MP (15:1) | 0,35 | 2,0 | 96,00* | 118,8 |
| 15 | AHL 28 + NBPT + DCD/MP (15:1) | 0,45 | 2,0 | 90,93* | 112,6 |
| 16 | AHL 28 + NBTPT + DCD/MP (15:1) | 0,25 | 2,0 | 94,35* | 116,8 |
| 17 | AHL 28 + NBTPT + DCD/MP (15:1) | 0,35 | 2,0 | 88,18 | 109,2 |
| 18 | AHL 28 + NBTPT + DCD/MP (15:1) | 0,45 | 2,0 | 89,60 | 110,9 |

| | | | | | |
|---|---|---|---|---|---|
| * statistisch gesichert bei α = 0,05 | | | | | |

### Beispiel 2: Einfluß von DH, DPH, DMPH und deren Kombination mit 3,4-Dimethylpyrazol (DMP)+Dicyandiamid (DCD) auf den Trockenmasseertrag von Grünmais (g/Gefäß) bei Oberflächendüngung (0,5 g N/Gefäß als AHL)

| Bezugsbasis: AHL 28 | | | | | |
|---|---|---|---|---|---|
| Pgl. Nr. | Prüfglied (Pgl.) | Konzentration (% Ges.-N-bezogen) | | TM-Ertrag | |
| | | Ureaseeinh. | DCD + DMP | g/Gefäß | rel. in % |
| 1 | Ohne N | - | - | 15,98* | 35,6 |
| 2 | AHL 28 | - | - | 44,90 | 100 |
| 3 | AHL 28 + DMPH | 0,75 | - | 46,00 | 102,5 |
| 4 | AHL 28 + DMPH + DCD/DMP (15:1) | 0,75 | 1,5 | 49,73 | 110,8 |
| 5 | AHL 28 + DMPH + DCD/DMP (15:1) | 1,00 | 1,5 | 50,63* | 112,8 |
| 6 | AHL 28 + DPH + DCD/DMP (15:1) | 0,75 | 1,5 | 52,80* | 117,6 |
| 7 | AHL 28 + DPH + DCD/DMP (15:1) | 1,00 | 1,5 | 50,73* | 113,0 |
| 8 | AHL 28 + DH + DCD/DMP (15:1) | 0,625 | 1,5 | 50,73* | 113,0 |
| 9 | AHL 28 + DH + DCD/DMP (15:1) | 0,75 | 1,5 | 50,60* | 112,7 |
| 10 | AHL 28 + DH + DCD/DMP (15:1) | 1,00 | 1,5 | 53,33* | 118,8 |

| | | | | | |
|---|---|---|---|---|---|
| * statistisch gesichert bei α = 0,05 | | | | | |

### Beispiel 3: Einfluß von PPDA, NBTPT, DCM, DCB in Kombination mit DCD/1H-1,2,4-Triazol auf den Trockenmasseertrag von Grünmais (g/Gefäß) bei Oberflächendüngung (0,5 g HS-N/Gefäß)

| Bezugsbasis: HS + DCD/TZ | | | | | |
|---|---|---|---|---|---|
| Pgl. Nr. | Prüfglied (Pgl.) | Konzentration (% N-bez.) | | Ertrag | |
| | | Ureaseinh. | DCD/TZ | g/Gefäß | rel. in % |
| 1 | Ohne N | - | - | 20,25* | 37,7 |
| 2 | Harnstoff | - | - | 43,88* | 81,6 |
| 3 | HS + DCD/TZ | - | 2,75 | 53,75 | 100 |
| 4 | HS + PPDA + DCD/TZ (10:1) | 0,10 | 2,75 | 68,13* | 126,7 |
| 5 | HS + PPDA + DCD/TZ (10:1) | 0,10 | 2,50 | 65,00* | 120,9 |
| 6 | HS + PPDA + DCD/TZ (10:1) | 0,10 | 2,25 | 67,00* | 124,7 |
| 7 | HS + NPTPT+ DCD/TZ (10:1) | 0,15 | 2,75 | 69,50* | 129,3 |
| 8 | HS + NPTPT+ DCD/TZ (10:1) | 0,15 | 2,50 | 66,50* | 123,7 |
| 9 | HS + NPTPT+ DCD/TZ (10:1) | 0,15 | 2,25 | 67,38* | 125,3 |
| 10 | HS + DCM+ DCD/TZ (10:1) | 0,35 | 2,75 | 69,83* | 129,9 |
| 11 | HS + DCM+ DCD/TZ (10:1) | 0,35 | 2,50 | 71,75* | 133,5 |
| 12 | HS + DCM+ DCD/TZ (10:1) | 0,35 | 2,25 | 65,75* | 122,3 |
| 13 | HS + DCB+ DCD/TZ (10:1) | 0,35 | 2,25 | 65,00* | 120,9 |
| 14 | HS + DCB+ DCD/TZ (10:1) | 0,45 | 2,25 | 67,40* | 125,4 |
| 15 | HS + DCB+ DCD/TZ (10:1) | 0,60 | 2,25 | 72,38* | 134,5 |

| | | | | | |
|---|---|---|---|---|---|
| * statistisch gesichert bei α = 0,05 | | | | | |

### Beispiel 4: Einfluß von DH in Kombination mit DCD/TZ bzw. GMPN/DCD auf den Trockenmasseertrages von Grünmais (g/Gefäß) bei Oberflächendüngung mit HS (0,7 g HS-N/Gefäß)

| Bezugsbasis: HS | | | | | |
|---|---|---|---|---|---|
| Pgl. Nr. | Prüfglied (Pgl.) | Konzentration (% N-bez.) | | Ertrag | |
| | | DH | NI⁺ | g/Gefäß | rel. in % |
| 1 | Ohne N | - | - | 29,20* | 51,3 |
| 2 | Harnstoff | - | - | 56,90 | 100 |
| 3 | HS + DCD/TZ (10:1) | - | 2,75 | 60,60 | 106,5 |
| 4 | HS + DCD/GMPN (8:1) | - | 2,00 | 58,60 | 103,0 |
| 5 | HS + DH + DCD/TZ (10:1) | 0,50 | 2,25 | 74,18* | 130,4 |
| 6 | HS + DH + DCD/TZ (10:1) | 0,75 | 2,25 | 76,83* | 135,0 |
| 7 | HS + DH + DCD/TZ (10:1) | 1,00 | 2,25 | 84,20* | 148,0 |
| 8 | HS + DH + DCD/GMPN (5:1) | 0,50 | 1,75 | 81,60* | 143,4 |
| 9 | HS + DH + DCD/GMPN (5:1) | 0,75 | 1,75 | 82,50* | 145,0 |
| 10 | HS + DH + DCD/GMPN (5:1) | 1,00 | 1,75 | 80,70* | 141,8 |
| 11 | HS + DH + DCD/GMPN (10:1) | 0,50 | 2,20 | 80,10* | 140,8 |
| 12 | HS + DH + DCD/GMPN (10:1) | 0,75 | 2,20 | 79,90* | 140,4 |
| 13 | HS + DH + DCD/GMPN (10:1) | 1,00 | 2,20 | 83,30* | 146,4 |

| | | | | | |
|---|---|---|---|---|---|
| * statistisch gesichert bei α = 0,05 | | | | | |
| NI⁺ = Nitrifikationsinhibitor | | | | | |

### Beispiel 5: Prüfung von 1-Guanyl-3-methylpyrazoliumnitrat (GMPN) in Kombination mit NBTPT, DH bzw. DCM hinsichtlich der Beeinflussung des Trockenmasseertrages (g/Gefäß) bei Grünmais und bei Oberflächendüngung (0,5 g AHL-N/Gefäß)

| Bezugsbasis: AHL 28 | | | | | |
|---|---|---|---|---|---|
| Pgl. Nr. | Prüfglied (Pgl.) | Konzentration (% N-bez.) | | Ertrag | |
| | | Ureaseinhibitor | GMPN | g/Gefäß | rel. in % |
| 1 | Ohne N | - | - | 17,43* | 39,8 |
| 2 | AHL 28 | - | - | 43,80 | 100 |
| 3 | AHL 28 + NBTPT | 0,25 | - | 46,42* | 106,0 |
| 4 | AHL 28 + NBTPT | 0,35 | - | 47,18* | 107,7 |
| 5 | AHL 28 + NBTPT | 0,45 | - | 48,20* | 110,0 |
| 6 | AHL 28 + NBTPT + GMPN | 0,25 | 0,75 | 53,45* | 122,0 |
| 7 | AHL 28 + NBTPT + GMPN | 0,35 | 0,75 | 52,96* | 120,9 |
| 8 | AHL 28 + NBTPT + GMPN | 0,45 | 0,75 | 55,11* | 125,8 |
| 9 | AHL 28 + DH + GMPN | 0,50 | 0,75 | 52,93* | 120,8 |
| 10 | AHL 28 + DH + GMPN | 0,75 | 0,75 | 54,82* | 125,2 |
| 11 | AHL 28 + DH + GMPN | 1,00 | 0,75 | 55,29* | 126,2 |
| 12 | AHL 28 + DCM + GMPN | 0,35 | 0,75 | 53,81* | 122,9 |
| 13 | AHL 28 + DCM + GMPN | 0,50 | 0,75 | 56,05* | 128,0 |
| 14 | AHL 28 + DCM + GMPN | 0,65 | 0,75 | 56,28* | 128,5 |

| | | | | | |
|---|---|---|---|---|---|
| * statistisch gesichert bei α = 0,05 | | | | | |

### Beispiel 6: Einfluß der Kombination DCIP mit DMP, MP und ClMP auf den Trockenmasseertrag von Grünmais bei Oberflächendüngung (0,5 g HS-N/Gefäß)

| Bezugsbasis: HS | | | | | |
|---|---|---|---|---|---|
| Pgl. Nr. | Prüfglied (Pgl.) | Konzentration (% N-bez.) | | TM-Ertrag | |
| | | DCIP | NI⁺ | g/Gefäß | rel. in % |
| 1 | Ohne N | - | - | 17,81* | 44,3 |
| 2 | HS | - | - | 40,21 | 100 |
| 3 | HS + DCIP | 0,75 | - | 43,98* | 109,4 |
| 4 | HS + DCIP + DMP | 0,50 | 0,50 | 49,12* | 122,1 |
| 5 | HS + DCIP + DMP | 0,75 | 0,50 | 50,53* | 125,7 |
| 6 | HS + DCIP + DMP | 1,00 | 0,50 | 54,90 * | 136,5 |
| 7 | HS + DCIP + MP | 0,50 | 0,50 | 51,60* | 128,3 |
| 8 | HS + DCIP + MP | 0,75 | 0,50 | 52,98* | 131,8 |
| 9 | HS + DCIP + MP | 1,00 | 0,50 | 53,89* | 134,0 |
| 10 | HS + DCIP + ClMP | 0,50 | 0,50 | 49,48* | 123,1 |
| 11 | HS + DCIP + ClMP | 0,75 | 0,50 | 54,98* | 136,7 |
| 12 | HS + DCIP + ClMP | 1,00 | 0,50 | 53,12* | 132,1 |

| | | | | | |
|---|---|---|---|---|---|
| * statistisch gesichert bei α = 0,05 | | | | | |
| NI⁺ = Nitrifikationsinhibitor | | | | | |

## Patentansprüche

1. Chemische Zusammensetzung, die folgende Komponenten enthält:
a) einen Ureaseinhibitor der allgemeinen Formel I 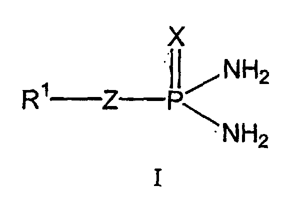 worin
X = O, S
Z = O, S oder -N-R² mit R² = Wasserstoff, C₁- bis C₈-Alkyl,
R¹ im Falle Z = O oder S Phenyl,
im Falle von Z = N-R² Wasserstoff oder C₁- bis C₄-Alkyl oder 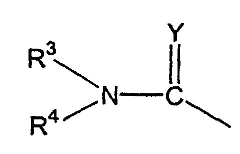 oder
R⁵OOC
bedeuten, wobei
R³, R⁴ unabhängig voneinander für Wasserstoff, einen Alkyl- Aryl-, Aralkyl-, Arylcarbonylamino-, Alkylcarbonylamino- oder Aralkylcarbonylaminorest stehen, wobei die Alkylreste jeweils 1 bis 8 C-Atome und die Arylreste jeweils 6 bis 10 C-Atome aufweisen und ggf. substituiert sein können, oder R³, R⁴ gemeinsam einen 1H-1,2,4-Triazol- oder einen ggf. in 4-Stellung substituierten 3(5)-Methylpyrazolring bilden,
R⁵ einen C₁- bis C₈-Alkyl, einen C₆- bis C₁₀-Aryl- oder einen C₇- bis C₁₀-Aralkylrest darstellt, die ggf. substituiert sein können
Y O, S oder = NH bedeutet;
b) wenigstens eine Verbindung, die ausgewählt wird aus:
b₁) Nitrifikationsinhibitoren der allgemeinen Formel II 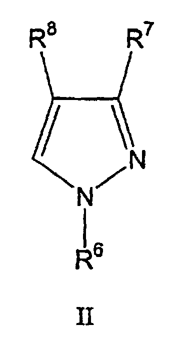 und sich daraus ableitende mögliche Isomere, Salze oder Komplexverbindungen,
wobei
R⁶ = Wasserstoff, Guanyl, C₁- bis C₄-Hydroxyalkyl, C₁- bis C₄-Carboxyalkyl,
R⁷ = Wasserstoff oder C₁- bis C₅-Alkyl,
R⁸ = Wasserstoff, C₁- bis C₈-Alkyl oder Halogen
bedeuten;
und
b₂) 1H-1,2,4-Triazol.

2. Zusammensetzung nach Anspruch 1, wobei die für R⁶ stehenden C₁- bis C₄-Hydroxyalkylreste zusätzlich Halogen-Substituenten aufweisen.

3. Zusammensetzung nach den Ansprüchen 1 oder 2, wobei die durch R³ und R⁴ gebildeten 3-Methylpyrazolringe in 4-Stellung einen C₁- bis C₄-Alkylrest oder einen Halogenrest, vorzugsweise Chlor, besitzen.

4. Zusammensetzung nach den Ansprüchen 1 bis 3, wobei die Komponente b₁) in Form eines Salzes, ausgewählt aus der Gruppe Nitrat, Halogenid, Sulfat, Phosphat, Acetat, vorliegt.

5. Verwendung der Zusammensetzung nach den Ansprüchen 1 bis 4 als Additiv für harnstoffhaltige Stickstoffdüngemittel.

6. Verwendung nach Anspruch 5, wobei die Zusammensetzung in einer Menge von 0,1 bis 30 Gew.-%, bezogen auf das Gewicht des Stickstoffdüngemittels, eingesetzt wird.

7. Verwendung nach den Ansprüchen 5 oder 6, wobei die Zusammensetzung in Form einer Formulierung, einer Lösung oder eines Suspensionskonzentrates getrennt oder gleichzeitig mit dem Düngemittel ausgebracht werden.

8. Verwendung der Zusammensetzung nach den Ansprüchen 1 bis 4 zur Verminderung der Stickstoffverluste bei organischen Düngern bzw. während der Güllelagerung und zur Absenkung der Ammoniaklast in Tierställen.

9. Verwendung der Zusammensetzung nach den Ansprüchen 1 bis 4 zur Hemmung und Regulierung der enzymatischen Harnstoffhydrolyse und der Nitrifikation.

10. Harnstoffhaltiges Düngemittel, enthaltend, bezogen auf den Stickstoffgehalt des Düngemittels, 0,1 bis 4,5 Gew.-% des Ureaseinhibitors a), 0,1 bis 5,0 Gew.-% des Nitrifikationsinhibitors b₁) und/oder 0,25 bis 4,5 Gew.-% 1H-1,2,4-Triazol b₂).

11. Düngemittel gemäß Anspruch 10, wobei die Komponente b₁) und/oder b₂) noch 1 bis 20 Gew.-Teile Dicyandiamid pro Gew.-Teil Pyrazol-Derivat bzw. 1H-1,2,4-Triazol enthält.

## Claims

1. Chemical composition containing the following components:
a) a urease inhibitor of the general formula I 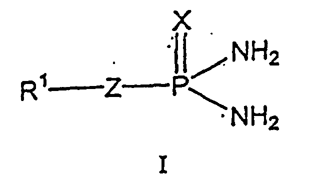 wherein
X= O,S
Z = O, S or -N-R² where R² = hydrogen, C₁ to C₈ alkyl,
R¹ in the case of Z = O or S denotes phenyl,
in the case of Z = N-R² denotes hydrogen or C₁ to C₄ alkyl or 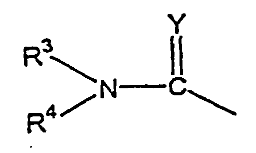 or
R⁵OOC
wherein
R³, R⁴ independently of one another represent hydrogen, an alkyl, aryl, aralkyl, arylcarbonylamino, alkylcarbonylamino or
aralkylcarbonylamino group, wherein the alkyl groups have in each case 1 to 8 C atoms and the aryl groups .in each case 6 to 10 C atoms and may optionally be substituted, or R³, R⁴ together form a 1H-1,2,4-triazole or a 3(5)-methylpyrazole ring optionally substituted in 4 position,
R⁵ represents a C₁ to C₈ alkyl, a C₆ to C₁₀ aryl or a C₇ to C₁₀ aralkyl group, which may optionally be substituted
Y denotes O, S or =NH;
b) at least one compound which is selected from:
b₁) nitrification inhibitors of the general formula II 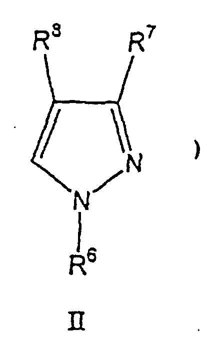 and isomers possibly being derived therefrom,
salts or complex compounds,
wherein
R⁶ = hydrogen, guanyl, C₁ to C₄ hydroxyalkyl, C₁ to C₄ carboxyalkyl,
R⁷ = hydrogen or C₁ to C₅ alkyl,
R⁸ = hydrogen, C₁ to C₈ alkyl or halogen;
and
b₂) 1H-1,2,4-triazole.

2. Composition according to claim 1, wherein the C₁ to C₄ hydroxyalkyl groups representing R⁶ additionally have halogen substituents.

3. Composition according to claims 1 or 2, wherein the 3-methylpyrazole rings formed by R³ and R⁴ have a C₁ to C₄ alkyl group or a halogen atom, preferably chlorine, in 4 position.

4. Composition according to claims 1 to 3, wherein component b₁) is present in the form of a salt, selected from the group nitrate, halide, sulphate, phosphate, acetate.

5. Use of the composition according to claims I to 4 as additive for urea-containing nitrogen fertilisers.

6. Use according to claim 5, wherein the composition is used in a quantity of 0.1 to 30 wt.%, based on the weight of the nitrogen fertiliser.

7. Use according to claims 5 or 6, wherein the composition is applied in the form of a formulation, a solution or a suspension concentrate separately or simultaneously with the fertiliser.

8. Use of the composition according to claims 1 to 4 to reduce the nitrogen losses in organic fertilisers or during liquid-manure storage and to lower the ammonia load in animal barns.

9. Use of the composition according to claims 1 to 4 to inhibit and control enzymatic urea hydrolysis and nitrification.

10. Urea-containing fertiliser containing, based on the nitrogen content of the fertiliser, 0.1 to 4.5 wt.% of the urease inhibitor a), 0.1 to 5.0 wt.% of the nitrification inhibitor b₁) and/or 0.25 to 4.5 wt.% of 1H-1,2,4-triazole b₂).

11. Fertiliser according to claim 10, wherein component b₁) and/or b₂) also contains 1 to 20 parts by weight of dicyandiamide per part by weight of pyrazole derivative or 1H-1,2,4-triazole.

## Revendications

1. Composition chimique qui contient les composants suivants :
a) un inhibiteur d'uréase de formule générale I 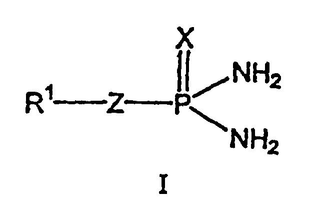 dans laquelle
X = O, S
Z = O, S ou -N-R² avec R² = un atome d'hydrogène, un groupe alkyle en C₁ à C₈,
R¹ représente un groupe phényle dans le cas où Z = O ou S,
un atome d'hydrogène ou un groupe alkyle en C₁ à C₄ ou 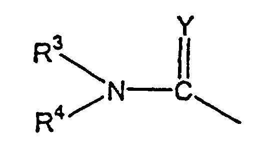 ou
R⁵OOC dans le cas où Z = N-R²,
dans laquelle
R³, R⁴ représentent indépendamment l'un de l'autre, un atome d'hydrogène, un résidu alkyle, aryle, aralkyle, arylcarbonylamino, alkylcarbonylamino, ou aralkylcarbonylamino, les résidus alkyle présentant respectivement 1 à 8 atomes de C et les résidus aryle respectivement 6 à 10 atomes de C, et pouvant éventuellement être substitués, ou bien R³, R⁴ forment en commun un cycle 1H-1,2,4-triazole ou un cycle 3(5)-méthylpyrazole, éventuellement substitué dans la position 4,
R⁵ représente un résidu alkyle en C₁ à C₈, un résidu aryle en C₆ à C₁₀, ou un résidu aralkyle en C₇ à C₁₀, qui peuvent éventuellement être substitués,
Y représente O, S ou = NH;
b) au moins un composé qui est choisi parmi:
b₁) les inhibiteurs de nitrification de formule générale II 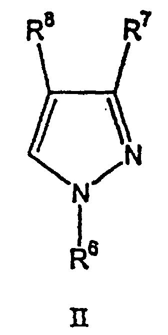 et les isomères, sels ou complexes possibles dérivés de ceux-ci,
où
R⁶ = un atome d'hydrogène, un groupe guanyle, hydroxyalkyle en C₁ à C₄, carboxyalkyle en C₁ à C₄,
R⁷ = un atome d'hydrogène, ou un groupe alkyle en C₁ à C₅,
R⁸ = un atome d'hydrogène, un groupe alkyle en C₁ à C₈, ou un atome d'halogène;
et
b₂) le 1H-1,2,4-triazole.

2. Composition selon la revendication 1, dans laquelle les résidus hydroxyalkyle en C₁ à C₄ représentant R⁶, présentent en outre des substituants halogéno.

3. Composition selon les revendications 1 ou 2, dans laquelle les cycles 3-méthylpyrazole formés par R³ et R⁴ possèdent un résidu alkyle en C₁ à C₄ ou un résidu halogéno, de préférence chloro, dans la position 4.

4. Composition selon les revendications 1 à 3, dans laquelle le composant b₁) existe sous forme d'un sel, choisi dans le groupe formé par un nitrate, un halogénure, un sulfate, un phosphate, un acétate.

5. Utilisation de la composition selon les revendications 1 à 4, en tant qu'additif pour des engrais azotés contenant de l'urée.

6. Utilisation selon la revendication 5, dans laquelle la composition est mise en oeuvre en une quantité de 0,1 à 30% en poids, par rapport au poids de l'engrais azoté.

7. Utilisation selon les revendications 5 ou 6, dans laquelle la composition est produite sous forme d'une formulation, d'une solution ou d'un concentré de suspension, de manière séparée ou simultanée avec l'engrais.

8. Utilisation de la composition selon les revendications 1 à 4, pour diminuer les pertes d'azote dans les engrais organiques ou bien pendant le stockage du lisier et pour abaisser la charge d'ammoniaque dans les étables à bestiaux.

9. Utilisation de la composition selon les revendications 1 à 4, pour inhiber et réguler l'hydrolyse enzymatique de l'urée et la nitrification.

10. Engrais contenant de l'urée, contenant 0,1 à 4,5% en poids de l'inhibiteur d'uréase a), 0,1 à 5,0% en poids de l'inhibiteur de nitrification b₁) et/ou 0,25 à 4,5% en poids du 1H-1,2,4-triazole b₂), par rapport à la teneur en azote de l'engrais.

11. Engrais selon la revendication 10, dans lequel le composant b₁) et/ou b₂) contient encore 1 à 20 parties en poids de dicyanodiamide par partie en poids de dérivé pyrazole ou de 1H-1,2,4-triazole.
